# EUROPEAN PATENT APPLICATION

(11) **EP 1 197 859 A1**
(43) Date of publication of application: **17.04.2002**
(21) Application number: 01402593.6
(22) Date of filing: 08.10.2001
(51) Int. Cl.: G06F 9/50, G06F 9/44

(54) **Method and device for remotely using a data-processing object in a communications network**

(30) Priority: 10.10.2000 FR 0012943
(71) Applicant: CANON KABUSHIKI KAISHA, Tokyo (JP)
(72) Inventor: Zimmermann, Jacob, 78460 Chevreuse (FR); Moreau, Jean-Jacques, 35000 Rennes (FR)
(74) Representative: Quantin, Bruno Marie Henri

(57) **Abstract**

A method for remotely using a data-processing object accessible via a server station connected to a communications network, from a client station connected to the network. The method comprises the steps of: sending an object request to the server station, the object request including information for identifying an object accessible via the server station; receiving an object response sent by the server station, the object response including information for describing a user interface, the description information being associated with programmed functions, the interface allowing a user to use the object; starting up the user interface on the client station; executing at least one function associated with one element of the user interface, in response to the activation of this element by a user; sending a method-execution request to the server station in response to the execution of at least one programmed function associated with the element activated, the method-execution request including the information for identifying the object and at least one command which can be understood by the object.

## Description

The present invention relates to a method for remotely using a data-processing object accessible via a server station connected to a communications network, from a client station connected to the network. Correspondingly, the present invention relates to a method for executing a function on a data-processing object, this method being implemented in such a server station.

The present invention also relates to devices able to implement the above-mentioned methods.

The invention applies in a general way to the communications networks which define a communications protocol between the various sites linked to the network. Such a network may, by way of non-limiting example, be a planetary communications network such as the Internet.

In what follows, "data-processing object" is understood to be an object defined according to the well known programming concept designated by the expression "object-oriented programming". Such a data-processing object is a program element comprising "attributes" or parameters (also known as *arguments*), i.e. data which define its structure, and "methods" or functions which make it possible to define its behaviour. In the conventional way, the methods of an object may be called (or *invoked*) in order to manipulate the data of the object.

The development of the Internet and of electronic commerce requires the increasing deployment of applications of client-server type. In these applications, processing is carried out by software running on a server accessible from the network, the man-machine interface being furnished by client software executing on the client workstation and communicating with the server by means of a defined interface.

The World Wide Web (Web or WWW) constitutes the interface of choice for accessing the majority of the resources available on the Internet. The Web is a set of Internet protocols and of software which present the information in a hypertext format. The hypertext concept is employed to construct documents which reference other documents by the use of links, which can easily be selected by novice users.

Among the resources and protocols developed for the Web are found the URL (Uniform Resource Locator), the HTTP protocol (Hypertext Transfer Protocol), the HTML language (Hypertext Mark-Up Language), the XML language (Extensible Mark-Up Language) which supplements the HTML language, and the CGI interface (Common Gateway Interface).

HTTP is a client/server protocol which uses a request/response model. An HTTP client, or user agent (often a Web browser), connects to an HTTP server by using a URL, and addresses a request to it relating to a resource, such as an HTML document.

However, up to the present time, the Web has shown itself to be poorly adapted to the design of complex interactive applications, which often remain only slightly or not at all integrated into the Web, since they are based on the use of specific client software. In its conventional form, the Web in effect allows only a document-look-up service of the request-response type, whereas an on-line data processing service (e.g. photo album, bank account, etc.) requires an infrastructure for remote manipulation of data-processing objects.

This shortcoming is partly compensated for nowadays by the use of translators and gateways (for example the CGI interface) which convert the messages transmitted between a server and a client, performing the conversion from a representation which can be used by a client Web browser (for example HTML documents transported via the HTTP protocol) into a representation which is intelligible to a server application and vice versa. The use of translators and gateways implies increased complexity of implementation and an excessively cumbersome user interface.

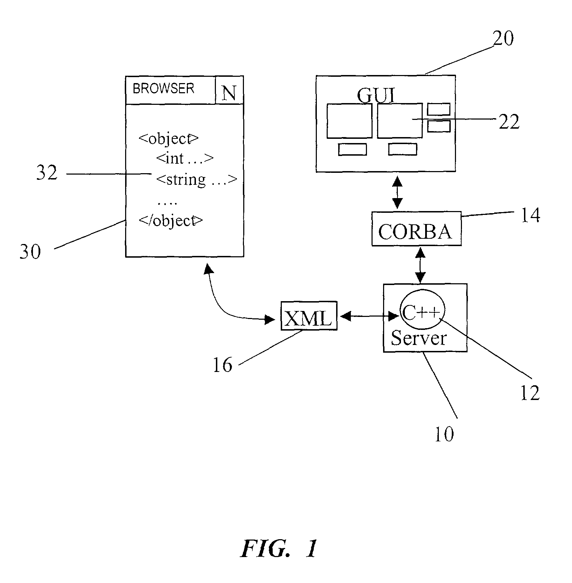

Figure 1 represents an example client-server system implemented in a communications network in which at least two client applications gain access to a distant object hosted by a server, by using two distinct known techniques.

Server software 10 hosted by a server station generates an instance of an object 12. The server software 10 is equipped, moreover, with two communications interfaces 14, 16 which make it possible to render the object 12 usable on the network by client applications hosted by client stations (for example microcomputers), using different communications protocols.

In this example, the communications interface 14 is based on an infrastructure known by the acronym CORBA (*Common Object Request Broker Architecture*).

The CORBA architecture, developed by the Object Management Group (OMG) consortium, makes it possible to access objects remotely, whatever the programming language used for their implementation. In this architecture, the objects possess a precise description of their methods and of the parameters thereof, expressed in the special-purpose language OMG-IDL (*Interface Definition Language*), and can communicate across the Internet by means of the IOP protocol (*Inter-ORB Protocol*).

A first client application 20 hosted in a client station uses the same protocols as those of the CORBA interface 14 in order to be able to forward its requests to the distant object 12, and, to this end, presents a specific man-machine interface to a user (GUI, *graphic user interface*) 22.

Architectures such as CORBA exhibit the drawback of requiring a special-purpose client application implementing the protocols and standards defined by the architecture in question, and dedicated to this use. This therefore induces a considerable lack of flexibility of use for the user. Moreover, all the protocols and standards brought into play are not an integral part of those defined for the Web.

Still with Figure 1, the server software 10 is equipped with a second communications interface 16 which makes it possible to render the object 12 usable on the network by a second client application 30.

The interface 16 makes it possible to encode the object 12 in a formatting language such as the XML language in order to create an XML document 32. This XML document can be interpreted and viewed using a client application 30, such as a Web browser.

While, according to this technique, the client software (Web browser) is not dedicated to this application (use of remote objects 12), this technique affords only a limited interest for the user.

This is because the representation of an object in formatting language (for example XML language) only allows the user to view the software structure of the object without any possibility of interactive use.

Moreover, the US patent No 6 078 322 (Simonoff et al.) relates to a technique for access to remote applications on a network. More particularly, a client device is described, called "universal client" and based on a client-server architecture, allowing data-processing systems of various architectures linked to the Internet to execute the same applications software without modification or re-compilation thereof.

This device uses a special-purpose programming language, GUIScript, which can be executed on a browser by means of a JAVA™ application (Applet). The program in GUIScript is downloaded onto the client station where it is executed, constructing a user interface and undertaking management thereof. In the case in which the client has to communicate with the server application, it sends it, in its turn, program code in GUIScript which will be executed by the server in order to trigger the desired operations in it.

However, although allowing a user to control a software application remotely, the device described in the above-mentioned patent does not allow the remote use of a data-processing object in the sense of object-oriented programming (OOP) and as defined above. Moreover, this device requires the use of a special-purpose programming language (GUIScript) not forming part of the standardised tools of the Web, and which both the server and the client have to support.

The object of the present invention is to remedy the shortcomings and defects of the prior art as briefly set out above. In particular, the present invention envisages allowing users of an Internet-type network to be able remotely to access any type of on-line service based on the use of data-processing objects, and to do so from a client interface such as a virtually standard Web browser, access to the remote services implying the use of protocols and resources which are current at the present time on the Web.

To that end, the present invention, according to a first aspect, relates to a method for remotely using a data-processing object accessible via a server station connected to a communications network, from a client station connected to the network. This method is characterised in that it comprises the following steps:
- sending an object request to the server station, the object request including information for identifying an object accessible via the server station;
- receiving an object response sent by the server station, the object response including information for describing a user interface, the information being associated with programmed functions, the interface allowing a user to use the object;
- starting up the user interface on the client station;
- executing at least one function associated with at least one element of the user interface, in response to the activation of at least one element by a user;
- sending a method-execution request to the server station, in response to the execution of at least one programmed function associated with at least one active element of the user interface, the method-execution request including the information for identifying the object and at least one command which can be understood by the object.

Hence, according to the invention, by making a conventional request to obtain a data-processing object, a client station receives, in response, a user interface of this object capable of being run on the client station, and on the basis of which a user of the client station can remotely use this object as if it were hosted locally in the client station.

According to one preferred embodiment of the invention, the method for remotely using a data-processing object further includes the following steps:
- receiving a method-execution response sent by the server station in response to the method-execution request, the method-execution response containing data indicative of the result of the execution of at least one command which can be understood by the object;
- decoding the data contained in the method-execution response and updating the user interface, if necessary.

In this way, the remote use of the object by a user of the client station is interactive with the object, since the result of an action by the user on the object via its user interface is reflected back to the user interface.

According to a second aspect, the invention relates to a method for executing a function on a data-processing object which can be used, via a server station connected to a communications network, by at least one client station connected to the network. This method is characterised in that it comprises the following steps, implemented in the server station:
- receiving an object request originating from a client station, the object request including information for identifying a data-processing object accessible via the server station;
- sending an object response to the client station, the object response including information for describing a user interface, the information being associated with programmed functions, the user interface allowing a user to use the object;
- receiving a method-execution request originating from the client station, the method-execution request including the information for identifying the object and at least one command which can be understood by the object.

According to a preferred embodiment of the invention, the method for executing a function on a data-processing object further includes the following steps:
- executing at least one command, received from the client station, on the data-processing object;
- sending a method-execution response to the client station, the method-execution response containing data indicative of the result of the execution of at least one command on the object.

According to one particular characteristic of the invention, in order to be accessible on the network, the data-processing object is associated in the server station with an electronic document containing the information describing at least one user interface and the associated programmed functions. Moreover, according to this characteristic, the information for identifying the object is an electronic address associated with the said electronic document.

In this way, the object is made accessible on the network by the publication of its user interface (the electronic document) which could thus be downloaded into a client station.

According to one preferred embodiment of the invention, in which the network is the Internet, the client station and the server station communicate by using the HTTP protocol. In this embodiment, the user interface of the remote object is supplied to the client station in the form of an electronic document, structured according to a mark-up language such as the XML language, and containing information descriptive of the interface, associated with programmed functions. This electronic document associated with the object is then identified by a URL-type electronic address. The programmed functions are implemented in the Javascript language, for example.

Thus, by the choice of standard protocols and languages of the Web, the present invention can be implemented in any type of current user Internet terminal, such as: personal computer, set-top box, Internet terminal, mobile telephone, etc., for example.

In particular, the device for remotely using a data-processing object, according to the invention, could be incorporated into an Internet browser (Web browser) implying minimal additional load in terms of calculating power and of memory capacity required.

Correspondingly, the invention relates to a device for remotely using a data-processing object, as well as a device for executing a function on a data-processing object, which are characterised in that they respectively include means suitable for implementing a method for remotely using a data-processing object, as defined above, and means suitable for implementing a method for executing a function on a data-processing object, as defined above.

The invention also envisages a client station linked to a communications network, characterised in that it includes a device for remotely using a data-processing object, as defined above.

The invention further envisages a server station linked to a communications network, characterised in that it includes a device for executing a function on a data-processing object, as defined above.

The invention also envisages a communications network including at least one client station in conformity with the invention, and at least one server station in conformity with the invention.

The invention also envisages a data-processing system including means suitable for implementing at least one of the methods according to the invention as set out above.

The invention also envisages a computer program including one or more instruction sequences able to implement at least one of the methods according to the invention as set out above, when this program is executed by a computer.

The invention further envisages an information medium, such as a diskette or a compact disc (CD), characterised in that it contains such a computer program.

The advantages of these devices, stations, of this data-processing system, of this computer program and of this information medium are identical to those of the methods as briefly set out above.

Other features and advantages of the invention will emerge further from the description below. In the attached drawings, which are given by way of non-limiting examples:
- Figure 1 represents an example client-server system implemented in a communications network, in which several client applications gain access to a remote object hosted by a server, by using known techniques;
- Figure 2 diagrammatically illustrates communications networks suitable for implementing the present invention;
- Figure 3 is a functional diagram illustrating the elements of a device according to the invention, for executing a method associated with a data-processing object, and which are incorporated into a server station;
- Figure 4 is a functional diagram illustrating the elements of a device according to the invention, for remotely using an object, and which are incorporated into a client station;
- Figures 5 and 6 are flowcharts detailing the method according to the invention for remotely using a data-processing object, which is implemented in a client station, and, more particularly, Figure 5 details the process for connecting a client station to a remote object, while Figure 6 details the process for processing an action by a user on an element of the user interface associated with the remote object;
- Figure 7 is a flowchart detailing the method according to the invention for executing a method associated with a data-processing object, employed in a server station;
- Figure 8 diagrammatically represents a computer suitable for implementing a method for remotely using a data-processing object, according to the invention, and/or a method for executing a method associated with a data-processing object, according to the invention.

The present invention applies in general to data-processing communications networks.

It applies particularly well to the widespread communications networks in which a very large number of data-processing servers are linked together.

Such a network may, by way of example, be a planetary communications network, such as the Internet network, built on a communications protocol which allows the computers connected to the network to exchange documents.

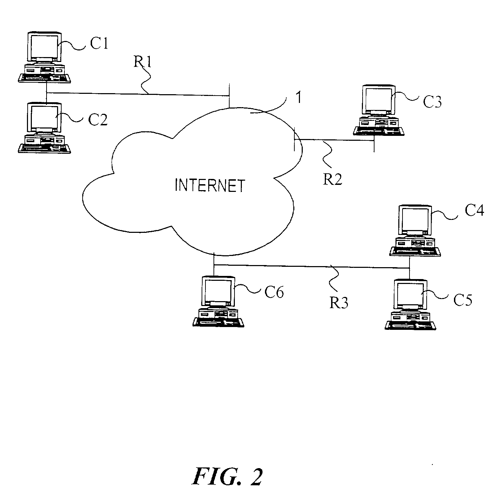

Such a network is illustrated in Figure 2, for example.

In this example, and in a non-limiting way, three data-processing networks R1, R2 and R3 are Ethernet-type networks, connected together, for example, by means of the Internet network (1).

Each network R1, R2 and R3 includes one or more computers. Here, by way of example, the network R1 includes two computers C1, C2; the network R2 includes a single computer C3; and the network R3 includes three computers C4, C5 and C6.

Each of these computers C1, C2, C3, C4, C5, C6 is therefore capable of sending and of receiving data from any one of the other computers.

In such a network, it is usual for an information system, in which information is stored in documents, to be built above the communications network.

Such an information system may be a hypertext system, such that the documents stored include hypertext links, also called pointers, linking certain documents together. In other words, documents include pointers pointing to other documents, and a user of the network may ask for these other documents to be transmitted by actuating the pointers of an initial document.

By way of example, the conventional hypertext system built above the Internet communications network is the WWW system, the communications protocol used possibly being the hypertext transfer protocol HTTP.

In such a communications network, the set of documents grouped together in the memory of a data-processing server forms an information site, such that the communications network makes it possible to link a very large number of sites together. It will easily be understood that each of the computers C1 to C6 illustrated in Figure 2 may each in its turn be a data-processing server suitable for serving documents in response to requests sent over the network. or a computer of the communications network (also called client), able to send out requests in order to ask for documents over this network.

On top of these documents forming a conventional information system on a communications network, the computers C1 to C6 may also store and create data-processing objects by virtue of data-processing applications.

As set out above, a data-processing object is defined as an element comprising both various attributes (parameters) and a set of functions (methods) which make it possible to manipulate the attributes of the object and to modify their value. This set of functions and of attributes forms an interface of the data-processing object.

Each data-processing object may be created in a programming language used by a data-processing application. Such programming languages are known by the name of JAVA or C⁺⁺, for example.

It is conventional that, in such a system of distributed objects, these data-processing objects point to one another, that is to say that certain data fields of an object are themselves data-processing objects.

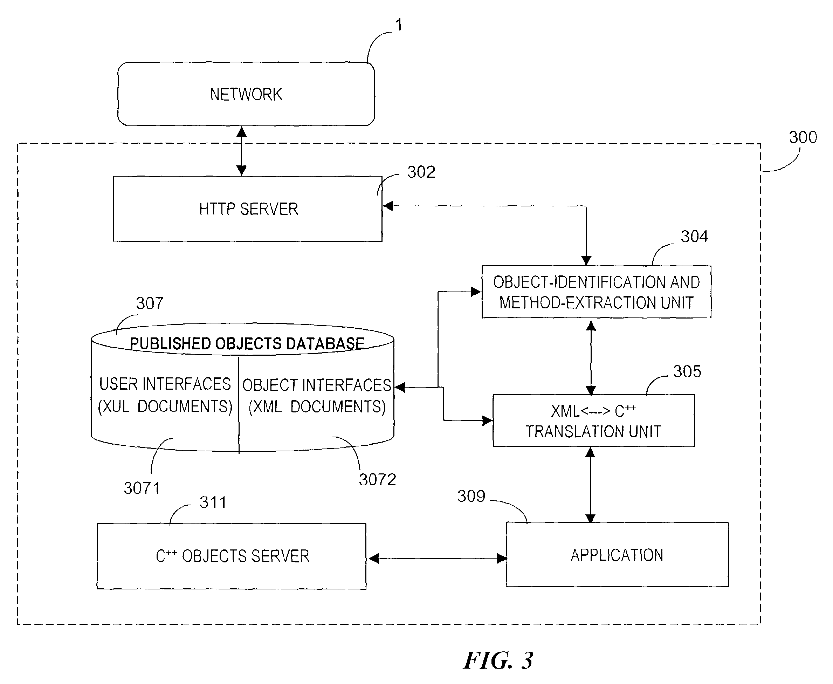

In connection with Figure 3, a device will first of all be described for executing a function associated with a data-processing object, in conformity with the invention. This device, called "server device" below, is employed in a server station linked to a communications network such as the computer C3 in the network of Figure 1, for example.

As represented in Figure 3, the server device 300 includes a database 307 of published objects. This database consists of data-processing objects rendered accessible (publication) to all the client stations of the network 1.

In this object database 307, in accordance with the invention, in order to be published, each object is associated with an electronic document 3071 containing information for describing a user interface allowing a user to use the object. This description information is associated, in the electronic document 3071, with programmed functions sensitive to actions of the user on the user interface of the object.

In practice the documents 3071 are files containing a programmed description of a graphic interface (GUI, graphic user interface) making it possible to employ the object in question.

In one preferred embodiment, the documents 3071 are XML documents, that is to say documents in which the graphic interface of the object is described by means of the XML (*extended mark-up language*) annotations language.

In practice, in this embodiment, the XUL (*XML-based User Interface Language*) language syntax is used, which is intended for constructing user interfaces, and developed by the Mozilla Organisation from the XML language, in the context of the development of its Web browser: "Mozilla". The web site: http://www.mozilla.org/ can be consulted in order to obtain further information on the XUL language.

Each document 3071 (designated by "XUL document"), created prior to publication, for example manually, describes the elements from which the user interface of the object is constructed, such as buttons, menus or input fields.

In accordance with the invention, in each XUL document, with the XUL instructions there are associated programmed functions implementing the processing necessary for activating each (graphic) element of the user interface of the object in question. According to one preferred embodiment, these functions are implemented in the well-known script language: JavaScript.

Still according to the invention, an electronic address is associated with each XUL document via which a client station can gain access to the said document. In practice, this electronic address is a URL *(uniform resource locator*) address. This electronic address is consequently indicative of the storage location of the XUL document with which it is associated and, by extension, it is indicative of the storage location of the data-processing object with which the XUL document in question is associated, since the latter represents the object in the published-object database 307.

In this way, the electronic address (URL) associated with an XUL document 3071 constitutes information for identifying the object corresponding to the XUL document in question.

For preference, a second electronic document 3072 is associated with each published object, in which is described the software interface of the object (that is to say the methods and attributes of the object). This document uses the XML language to represent the software interface of a data-processing object. An electronic address (URL) is also attributed to the XML document thus obtained, so as to render the software interface of the object (methods and attributes) accessible (publication) on the network.

The translation from the object-oriented programming language - for example the C⁺⁺ language - into the communications language used, here the XML language, uses a translation unit 305.

This translation unit 305 (also known as *marshaller*) makes it possible to translate a data -processing object created in a programming language (for example the C⁺⁺ language) into a communications language such as the XML language which can be used in the HTTP communications protocol of the Internet network.

Further information on the procedures for this translation, as well on those of the reverse translation (XML to C⁺⁺) could be obtained by consulting the European patent application number EP 00401754.7 filed in the name of the company Canon Research Centre France S. A.

In Annex I an example is given of a software interface of a data-processing object ("XML document"). The data-processing object given by way of example is an "image processor" and has the name "*ImageProcessor*". This object is published on a server called "tournesol" and includes a certain number of functions or methods: *"buylmage", "negative",* "*convertToBW"*, *"getlmage".*

Each of these functions includes a certain number of attributes or parameters (arguments). For example, the function *"buylmage"* returns a result of integer type (*int*) and includes a single attribute having the name *"name"* and of character-string type *(string).*

In Annex II an example is given of an XUL document defining a graphic-type user interface allowing a user to use the "*ImageProcessor*" object remotely.

In this example, the Javascript functions associated with the graphic elements of the interface are listed first. Hence, a certain number of functions are declared, among them the "*buyNewImage*" function. As can be seen, the *buyNewlmage* function makes it possible to call (also known as: invoke) the *buylmage* method of the *ImageProcessor* object.

Still in connection with Annex II, after the declaration of the Javascript functions, declarations of variables and of Javascript instructions are encountered in the XUL document, which are intended to initialise the display of the user interface.

These initialisation instructions consist especially in setting up input fields, in preparing selection lists, pre-selecting options, etc. These instructions may also be for the purpose of establishing a connection with another remote server and of preparing the dialogue with other objects, for example by registering with an electronic bank and by supplying the associated server with the certificates necessary for the operation of an electronic-payment protocol such as that known by the designation "Payword".

Hence, in Annex II, the function "*connectToServers*" is called in order, in this example, to establish a connection with the "tournesol" image server. The function *connectToServers* is declared in the Javascript functions.

The XUL document given as an example includes, after the instructions for initialising the graphic user interface (GUI) associated with the *ImageProcessor* object, the XUL instructions proper, which are intended to describe the graphic elements of the user interface of the object. Hence, in this example, a button (order box) bearing the legend *"Buy New"* displayed on the screen is associated with the Javascript function "*buyNewImage*" intended to submit to the server a request for purchasing a new image.

Back at Figure 3, in accordance with the invention, the server device 300 includes means for receiving a request message, designated here by "object request", originating from a client station; this object request including information for identifying a data-processing object accessible via the server station. This identification information consists in practice of the URL associated with the XUL document corresponding to the object in question in the published-object database 307.

These receiving means are incorporated into a module commonly called "HTTP server" 302 and providing the communications service with client stations according to the HTTP protocol.

The server device 300 also includes means for generating and sending to a client station a response message, called "object response", including the information for describing a user interface of a data-processing object requested by the client station, this information being associated with programmed functions. As set out previously, this information for describing a user interface is in practice contained in an XUL document as described above in connection with Annex II.

The above-mentioned means for generating and sending an object response are incorporated, on the one hand, into the HTTP server 302, and, on the other hand, into an object-identification and method-extraction unit 304. The HTTP server sends the request, while the unit 304 generates the content of the HTTP message (body of the message).

The server device 300 further includes means for receiving a request message, designated here by "method-execution request", originating from a client station, and including the URL pointing to the XUL document associated with an object in the published-object database 307. As will be explained later, the method-execution request includes at least one command which can be understood by the object used by the client station. In practice, an "understandable command" consists in the designation of a method of the object in question and in the passing of values given to the attributes (arguments) of the designated method.

The above-mentioned means for receiving a method-execution request are also incorporated into the HTTP server 302.

In accordance with the invention, the server device 300 further includes means for executing a command which is incorporated in a method-execution request. received from the client station, and relating to a data-processing object. These means are distributed between the object-identification and method-extraction unit 304 and the translation unit 305.

In order to execute a particular function on a data-processing object, it is necessary to have this object available in the form of object-oriented program code, here in C⁺⁺ code. Hence the server device 300 includes a C⁺⁺ object server, as well as at least one software application 309 making it possible to employ these objects.

Finally, the server device 300 includes means for generating and sending a response message to a client station, the message being designated here by "method-execution response", and containing data indicative of the result of the execution of one or more commands on the data-processing object used. These means are furnished by, on the one hand, the translation unit 305 and the unit 304 (response-generation means), and, on the other hand, by the HTTP server 302 (response-sending means).

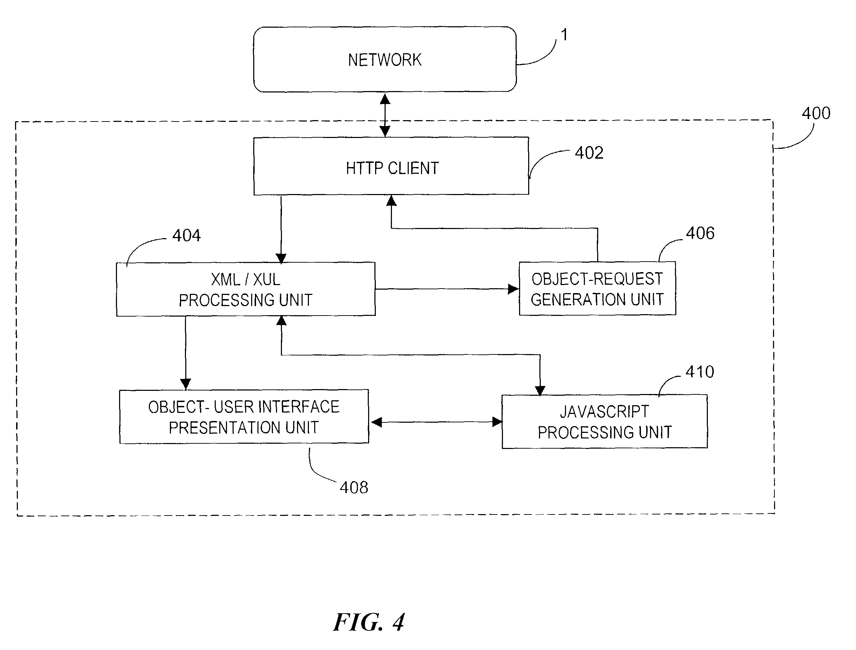

A device will now be described, in connection with Figure 4, for remotely using a data-processing object in conformity with the invention. This device, called "client device" below, is implemented in a client station linked to a communications network such as the computers C1, C2, C4, C5 or C6 in the network of Figure 1, for example.

The client device 400, incorporated into a client station linked to the network 1, includes means for communicating with a server station by using a communications protocol such as the HTTP protocol. These communication means are furnished by a module usually called "HTTP client" 402.

In accordance with the invention, the client device includes means for generating and sending a request message, designated here by "object request", to a server station, the said object request including information for identifying an object chosen by a user and accessible via the server station. In one preferred embodiment, this identification information consists of the URL associated with the XUL document corresponding to the data-processing object chosen.

These object-request generation and sending means are incorporated in a unit 406 called "object-request generation unit" (generation), and in the HTTP client 402 (sending).

Likewise, in accordance with the invention, the client device 400 includes means for receiving a response message, designated here by "object response", sent by the server station, the said object response including information describing a user interface, associated with programmed functions (XUL document). This user interface allows a user to use the chosen object remotely, i.e. manipulate and command it. These receiving means are furnished by the HTTP client 402.

In accordance with the invention, the client device 400 also includes means for running the user interface of the object on the client station. These means are furnished, on the one hand, by an XML/XUL processing unit 404 making it possible to decode documents using the syntax specific to the XML language and more particularly to the XUL language; and a Javascript processing unit 410 which co-operates with the unit 404 to interpret the Javascript functions incorporated in an XUL document as described above. Moreover, a unit 408, known as "object-user interface presentation unit", is tasked with presenting the object interface to the user.

Hence, after processing (i.e. decoding) of an XUL document by the unit 404 in co-operation with the unit 410, the user interface of the selected object is launched by the unit 408 and presented to the user.

In practice, in one preferred embodiment of the invention, the user interface of the object is a graphic interface (GUI) presented to the user in the form of a dialogue window on a display screen (not represented). The user will then be able to use a keyboard or a pointing device such as a mouse in order to carry on a dialogue with the graphic interface of the object.

In accordance with the invention, the client device 400 includes means for executing at least one programmed function associated with an element of the graphic interface, in response to the activation of the element by the user. These means are furnished by the Javascript processing unit 410 which co-operates with the presentation unit 408 to execute the Javascript functions associated with the graphic elements of the user interface of the object, when the latter are activated by the user.

The client device further includes means for generating and sending to the server station a request message, designated here by "method-execution request" and including information for identifying the object and at least one command which can be understood by the said object.

As mentioned above, an "understandable command" consists in the designation of a method of the object in question and in the passing of values given to the attributes (arguments) of the designated method, in response to the activation of a graphic element of the user interface (for example button, scroll bar) by the user.

In the embodiment described here, the command intended for the remote object is generated by the Javascript processing unit 410 as a result of the execution of a Javascript function associated with the user interface of the object. This "command" is then supplied by the unit 410 to the XML processing unit 404 in order to be encoded into XML language. The command is then passed to the object-request generation unit 406. The unit 406 is then tasked with generating the request message, while the HTTP client module 402 sends the request via the network 1 to the server station.

In accordance with the invention, the client device 400 further includes means for receiving a response message, in response to the method-execution request sent previously, the response being designated here by "method-execution response", sent by the server station. The method-execution response contains data indicative of the result of the execution of one or more commands contained in the method-execution request for execution on the data-processing object in question. These reception means are supplied by the HTTP client 402.

The client device also includes means for decoding the data contained in such a method-execution response. These means are supplied by the XML/XUL processing unit 404.

The client device 400 finally includes means for updating the user interface, if necessary, as a result of the reception of a method-execution response. These means are supplied by the Javascript processing unit 410 and the object-user-interface presentation unit 408.

It will be noted here that the client device 400 can be incorporated in its entirety into the one software component. In particular, the client device could be incorporated into an Internet browser (i.e. Web browser).

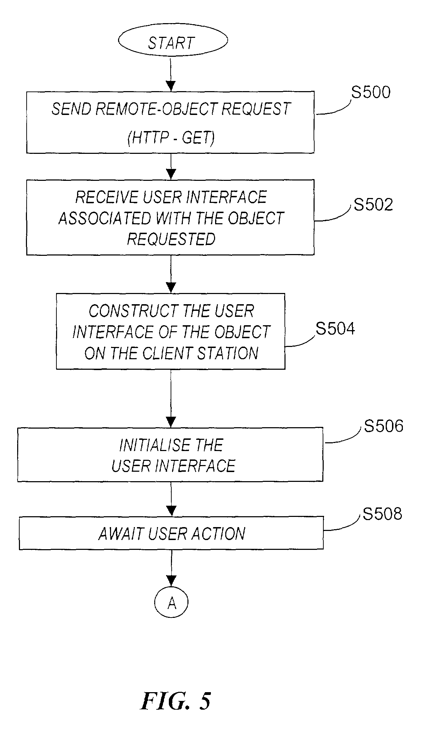

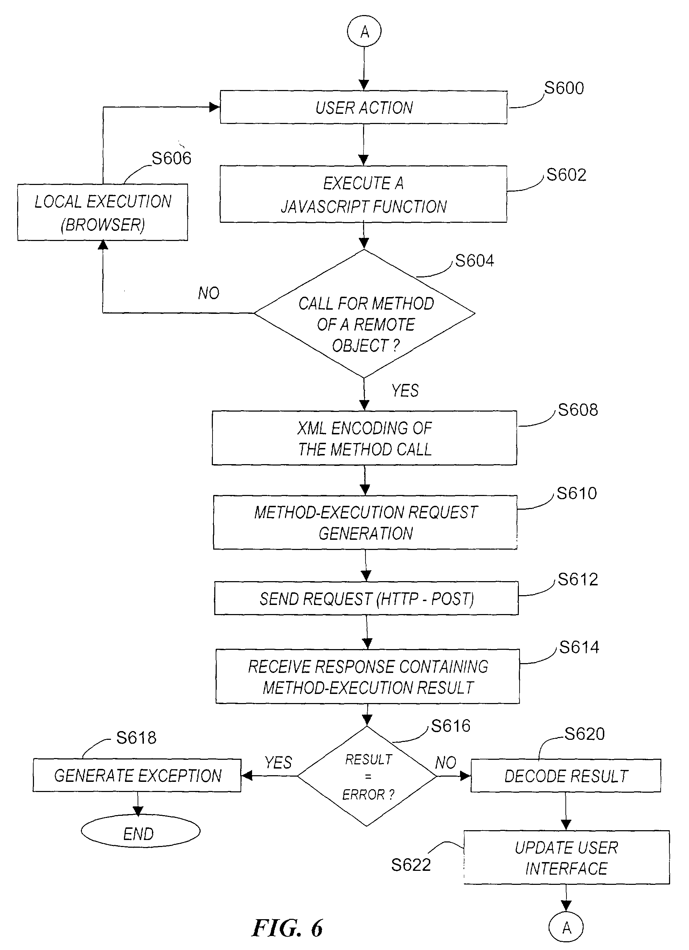

The method, according to the invention, for remotely using a data-processing object implemented in a client station will now be described by reference to Figures 5 and 6. More particularly, in connection with Figure 5, the method will be detailed for connecting a client station to a remote object. Then, in connection with Figure 6, the process for handling an action from a user on an element of the user interface associated with a remote object will be detailed.

In connection with Figure 5, a method for remotely using a data-processing object, in accordance with the invention, starts with a step S500 for sending an "object request" as defined above to the server station. The object request includes information for identifying a data-processing object accessible via the server station. This identification information is, in the embodiment described, the URL pointing to the XUL document, describing the user interface of the object, published in the server station.

In practice, when the client device 400 is a Web browser, the user enters the URL corresponding to the object which he desires to use, at the keyboard for example.

For example, if the "ImageProcessor" object given in the Annex is considered, this URL could be as follows:
http://tournesol:8080/web-obj/imageprocessor.xul

The object request sent by the client station is an HTTP request message using the "GET" method of the HTTP protocol. The HTTP command "GET" is used conventionally to recover a resource from a server. In the context of the invention, the GET command is used to recover the user interface of a remote object, in the same way as to obtain any ordinary Web page.

At the following step (S502), the client station receives a response message (HTTP) from the server station. This response message contains an XUL document describing the user interface of the object, like the one supplied in Annex II.

The XUL document is then decoded, jointly by the XML/XUL processing unit 404 and the Javascript processing unit 410. Then the graphic interface on the client station is launched by the presentation unit 408 in co-operation with the Javascript processing unit 410. The launching of the user interface takes place as follows.

In a first phase (step S504), the user interface is constructed, that is to say displayed on the screen. Then, in a second phase (step S506), the user interface is initialised.

Next, (step 508), the client device places itself in a standby state awaiting actions by the user on the user interface. It can therefore be said that, at that instant, the user is connected to the remote object.

The rest of the method according to the invention, for remotely using a data-processing object, will now be described in connection with Figure 6.

In Figure 6, at step S600, the user performs an action on the user interface of the remote object. An action from the user corresponds to the activation of at least one element of the user interface, for example a graphic element such as a button.

In response to an action by the user, a programmed function associated with the activated element is executed. In the preferred embodiment described here, this programmed function is a Javascript function such as those given by way of example in Annex II. Hence, if the user activates the "Buy New" button on the screen with the aid of the mouse, the function *buyNewImage* is executed.

The following step S604 is a test step in which it is determined whether the Javascript function called induces a remote-object method call. This is because it may be that the function executed in response to an action by the user does not directly relate to the remote object, for example, in order to modify a display parameter of the graphic interface.

If this is the case (S606), the function is executed locally in the client station, by the client device (e.g. a Web browser). The client device then places itself back into a state of awaiting the next action by the user (S600).

In contrast, if the Javascript function executed generates a remote-object method call, the client device generates and sends, to the server station, a request message - the method-execution request mentioned above - including the URL of the XUL document corresponding to the object, and an object-method call.

To that end, in a first step, S608, encoding of the call for the method into the XML language is carried out. To that end, the designation of the method called and the associated parameters are supplied by the Javascript processing unit 410 to the XML/XUL processing unit 404.

By way of example, in Annex II, if the method call is generated by the Javascript function "buyNewlmage", the method called is "buylmage"and the associated parameter is contained by the variable "name". In this example, it is assumed that the variable "name" has the value "photo1.bmp" input by the user via the graphic interface of the remote object.

Annex III gives an example of an encoded method call according to the invention. The designation of the method ("function name") called "buylmage" and the value of the parameters ("arguments") of this method: "photo1.bmp" will be recognised here. In this example, the user wishes to buy the digital image identified by "photo1" in the image server with which is associated the remote data-processing object "ImageProcessor" (Annex I).

Once the XML encoding of the method call has been carried out, the method-execution request containing the above-mentioned method call is generated by the object-request generation unit 406 (step S610). Next, the request is sent to the server station by the HTTP client module 402 (step S612).

The method-execution request sent by the client station is an HTTP request message using the "POST" method of the HTTP protocol. The HTTP command "POST" is used conventionally to send data from a client to a server.

Still with Figure 6, at the following step, S614, the client device places itself in a state of awaiting a response from the server station, designated by "method-execution response", this response containing data indicative of the result of the execution of the called method of the object.

When the client station receives (S614) a response message (method-execution response) originating from the server station, the response is analysed (step S616) by the HTTP client module 402, so as to determine whether the remote execution of the called method of the remote object has given rise to an error or to a valid result.

If the result of the execution contained in the response message is an error message, the XML/XUL processing unit (404) associated with the Javascript processing unit (410) generates the corresponding exception (step S618), that is to say carries out the processing provided for this type of execution anomaly. In this case, the remote-utilisation process is broken off.

If the result is valid, decoding of the result is carried out (step S620). This decoding, carried out by the XML/XUL processing unit (404) associated with the Javascript processing unit (410), consists particularly in translating the received result from the XML language into a format in which this result can be made use of by the user interface of the remote object. In the context of the embodiment described here, the result is translated into Javascript so as to be able to be used by the calling Javascript program code (i.e. the code of the calling Javascript function).

Once the result has been decoded, the user interface of the object is updated (S622) with the result, so as to announce to the user the result of his request.

Finally, the user device places itself back in a state of awaiting another action by the user on the graphic interface of the object (step S600).

Annex IV gives an example of the content of a method-execution response generated by the server station and then sent to the client station.

In this example, what is involved is the result of the execution of the "buylmage" method (cf Annex III) associated with the remote object "ImageProcessor" (cf. Annex I), and invoked by executing the Javascript function "BuyNewlmage" (cf Annex II). The result is encoded in XML language. The marker <wob> means "web object", the result consists of the integer value "10". In the context of this example, this value "10" is a serial number corresponding to the digital image "purchased" by the user. This serial number identifies the "purchased" image uniquely and makes it possible for the user then to gain access freely to this image, on condition only of supplying this serial number.

In this example, the value "10" is decoded and then supplied to the Javascript processing unit 410 which forwards it to the code of the calling BuyNewlmage function. The latter carries on executing and, via the instructions which follow the one at the origin of the remote-method call, allows updating of the user interface with the value returned ("10") by the remote method ("buylmage").

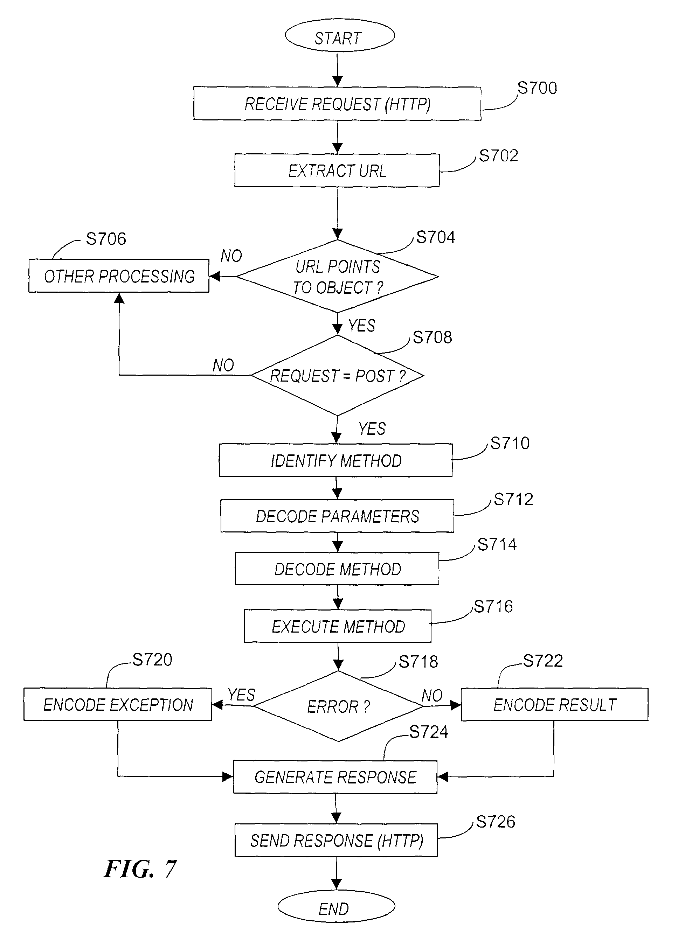

The process according to the invention for executing a method associated with a data-processing object, implemented in the server station, will now be described by reference to Figure 7.

In Figure 7, at step S700, the HTTP server 302 of the server station receives an HTTP request originating from a client station. At the following step (S702), the HTTP server extracts the URL contained in the request.

At the following step (S704), the identification unit 304 determines whether or not the URL extracted points to a data-processing object. If not - for example, the URL is pointing to a simple web page - appropriate processing is executed (S706).

If yes, it is determined whether the request received is an HTTP POST request (step S708).

If the request is not a POST request, it may then be a GET request, for example, intended for obtaining an XUL document associated with a published object in the database 307. In this case, the appropriate processing is applied (step S706), for example sending of the XUL document requested.

Conversely, if the request received is a POST request, this condition added to the fact that the URL contained in the request is pointing to an object (S704) makes it possible to determine that a method-execution request is involved.

In this case, the unit 304 identifies the method (step S710) (for example, the "buylmage" method). Next, at the following step (S712), the value of the parameters associated with the method identified are decoded (for example "photo1.bmp").

At the step which follows (S714), the method is decoded, that is to say the method identified with its arguments is translated from the XML language into the C⁺⁺ language. This translation is carried out by the translation unit 305.

At the following step S716, the method translated is then called (invoked) by the application 309 (this makes it possible to employ the published objects in the server station) on the object identified by the URL extracted from the request (S700).

The following step S718 is a test step in which the result of the execution of the method is evaluated. If the execution of the method produces an error, an exception intended to point out the error caused is encoded (step S720).

If the result produced is valid, this result is encoded (step S722). The encoding of the result (or of the exception) consists in translating the result obtained from the C⁺⁺ language into XML language. This translation is once again carried out by the translation unit 305.

Once the result or the exception has been encoded, the (HTTP) response message ("method-execution message") is generated by the object-identification unit 304 and sent by the HTTP server 302, via the network, to the client station at the origin of the POST request.

The client station receives this response and processes it as set out above (Fig. 6, S614).

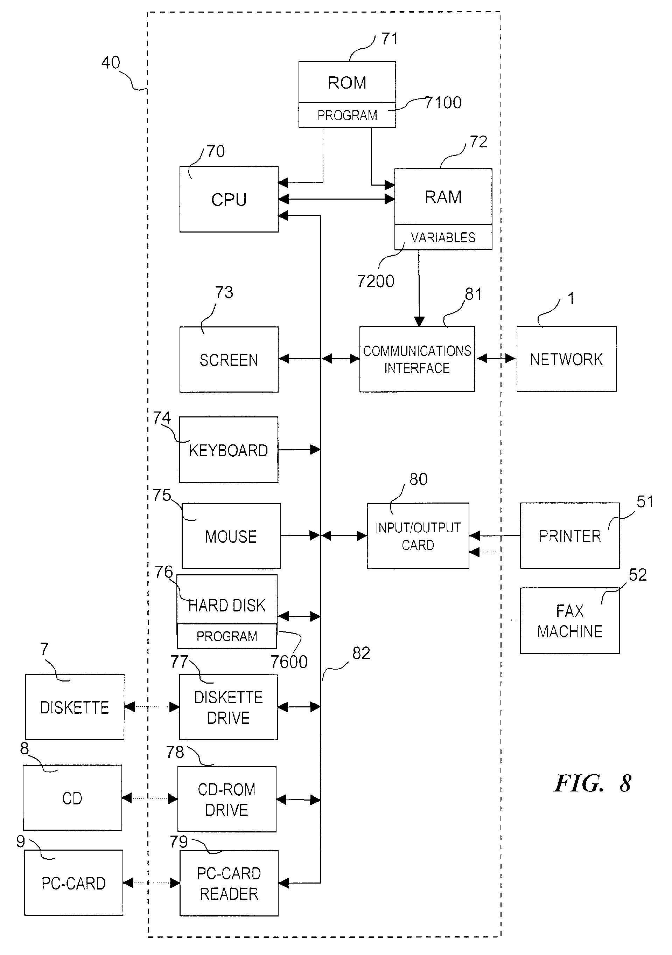

A computer will now be described, by reference to Figure 8, suitable for implementing a method for remotely using a data-processing object, in conformity with the invention, and/or a method for executing a function on a data-processing object, in conformity with the invention.

Such a computer can, in fact, include both means suitable for implementing a method for remotely using a data-processing object, and means suitable for implementing a method for executing a function on a data-processing object. This is the case especially when the computer, constituting a station in a communications network, is client for access to remote objects and server for offering, to remote stations, access to objects which it hosts.

In this embodiment, the means suitable for implementing methods according to the invention are essentially software components or programs.

Consequently, these software components include one or more sequences of instructions, execution of which by the said computer makes it possible to implement the methods according to the invention.

In Figure 8, the computer 40 which typically may be a microcomputer or workstation, conventionally includes a central processing unit (CPU) 70, linked to a read-only memory (ROM) 71 and to a random-access memory (RAM) 72, as well as to a data bus 82.

The data bus 82 allows communication between the various sub-elements of the computer 40, or the elements which are linked to it. However, communication between the various sub-elements of the computer is not limited to the bus 82. In particular, the central processing unit 70 is capable of communicating instructions to any sub-element of the computer 40 directly or via another sub-element of the computer 40.

The computer 40 includes a communications interface 81 linked to a communications network 1 such as the Internet. This communications interface 81 comprises a modem, for example, of a type known to the person skilled in the art. Via the communications interface 81, the computer 40 may, for example, allow access to objects which it hosts or allow a user connected to the computer to gain access to remote objects.

The computer 40 conventionally also includes a data-storage means such as a hard disk 76, for example. It may also include a disk drive 77, a CD-ROM drive 78 and a so-called PC-CARD-format card reader 79.

A diskette 7, a compact disc (CD) 8, a PC-CARD-type card 9 - intended to be read respectively by the disk drive 77, the CD-ROM drive 78 and the card reader 79 - as well as the hard disk 76, may be used for storing data-processing objects and software applications which employ them; as well as for storage of the software code allowing the implementation of the method or methods according to the invention.

According to one preferred embodiment, the executable code of the program making it possible to implement the method or methods according to the invention, is stored in memory on the hard disk 76 (program 7600).

According to one embodiment variant, the executable code of this program is stored in the ROM 71 (program 7100).

According to another embodiment variant, the executable code of the program may be downloaded from the communications network 1 via the communications interface 81 so as to be stored in memory on the hard disk 76.

The communications interface 81, according to one preferred embodiment, includes Internet browser software (*Web browser*).

During execution of the program, the variables created and modified are stored in memory in registers of the RAM 72 (variables 7200).

The computer 40 further includes a screen 73 allowing display of a graphic interface between the program according to the invention and the user, especially for displaying a user interface (GUI) associated with a data-processing object used remotely, in conformity with the invention. The user may then formulate requests with the aid, for example, of a pointing device such as a mouse 75, or else by the use of a keyboard 74.

The computer 40 further includes various peripherals, such as a printer 51 making it possible, for example, to print downloaded documents, or a fax machine 52. These peripherals are linked to the computer via an input/output card 80.

Clearly, many modifications may be made to the embodiments of the invention described above without departing from the context of the invention. In particular, provision may be made to associate with each of the data-processing objects published in a server station several electronic documents (XUL documents) each describing a different user interface of the object, each of the user interfaces of the object being adapted to the capabilities of the type of client station in question. For example, the user interface of the object could be simplified if the client station is a portable telephone.

### ANNEX

### Annex I - Example software interface of a data-processing object ("XML document").

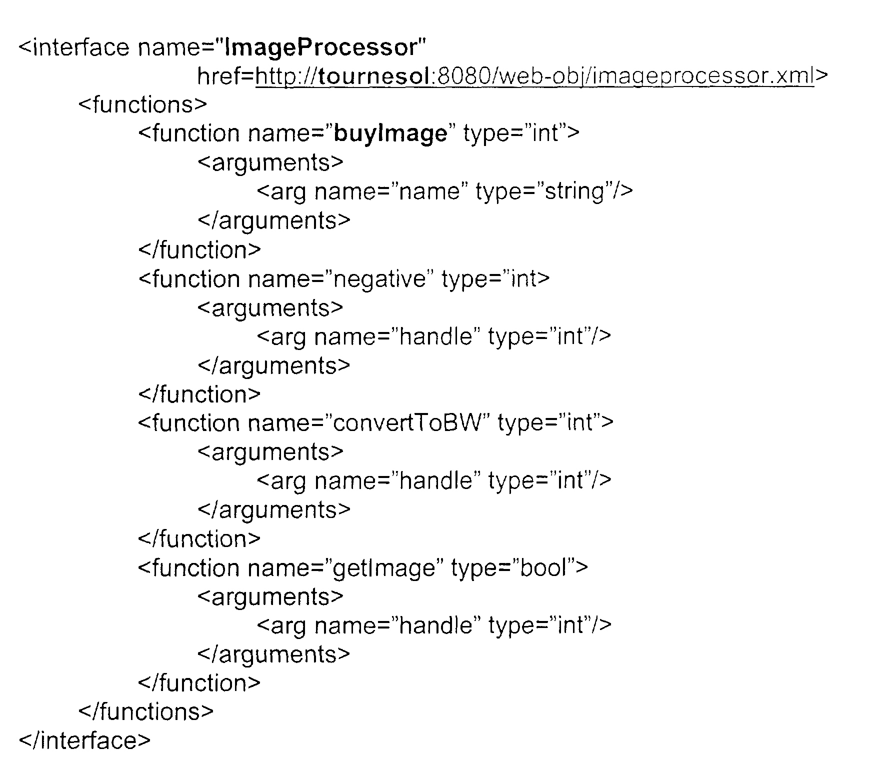

### Annex II - Example of an "XUL document"

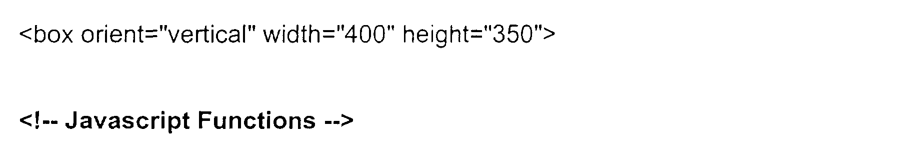

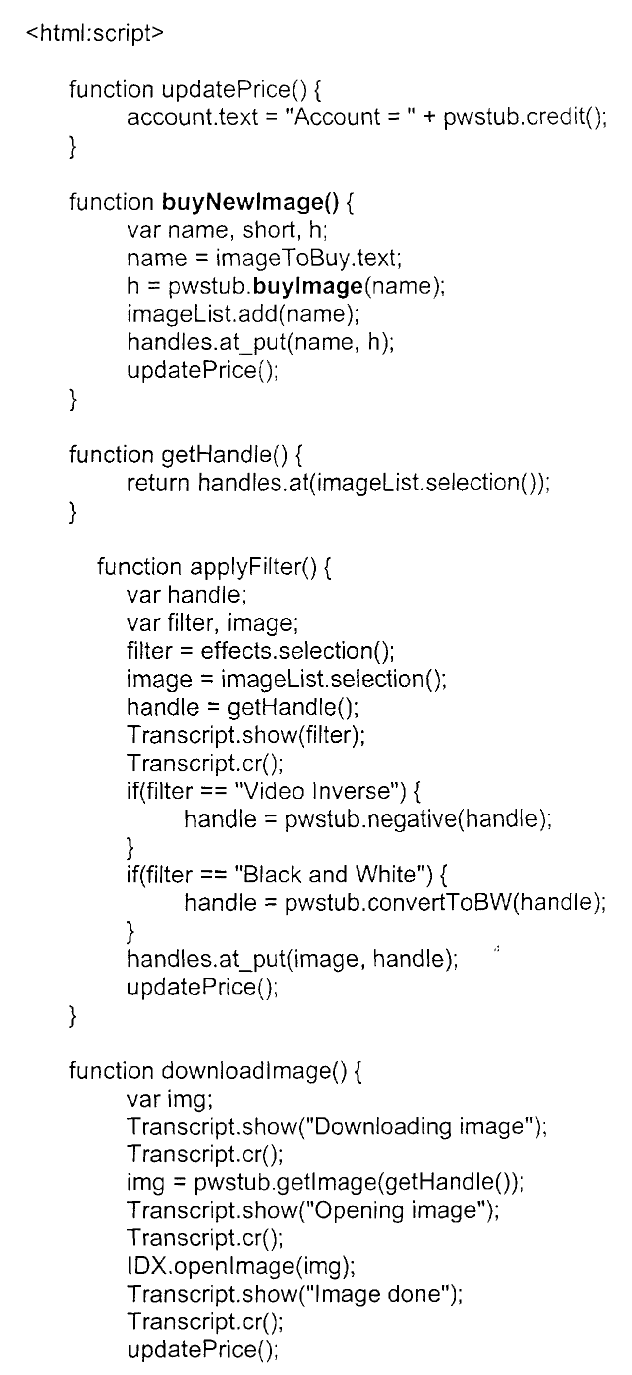

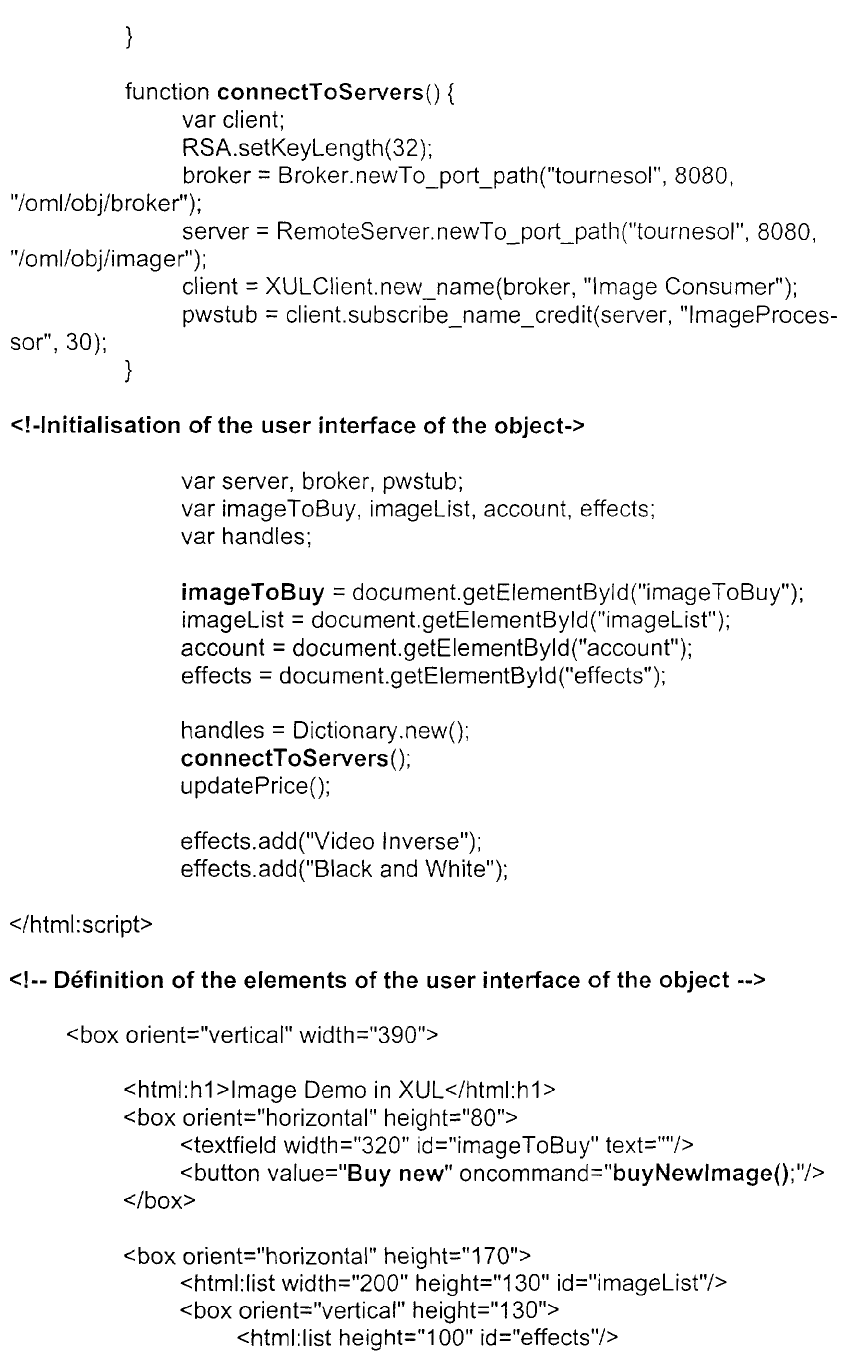

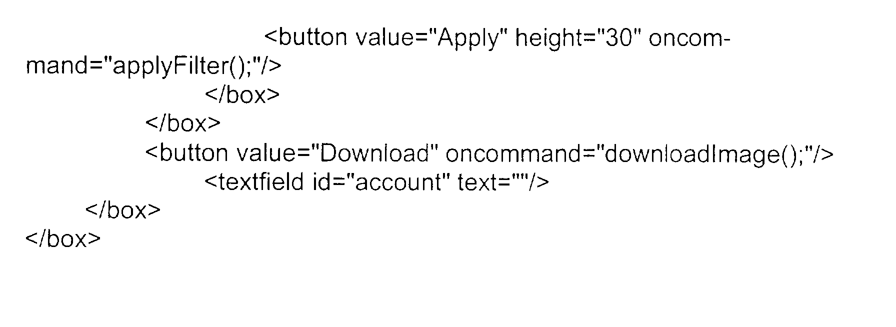

### Annex III - Example of contents of a "method-execution request"

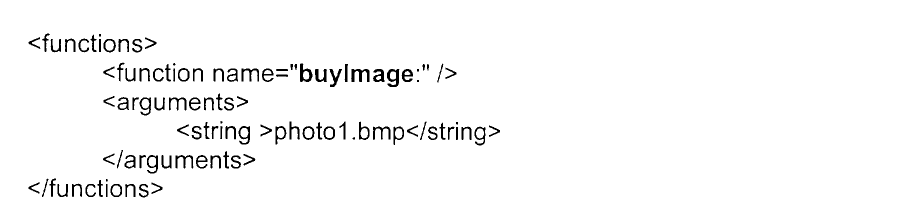

### Annex IV: Example of the contents of a "method-execution response"

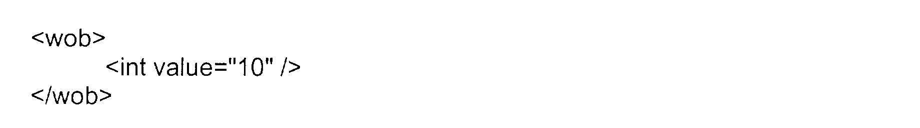

## Claims

1. Method for remotely using a data-processing object accessible via a server station connected to a communications network, from a client station connected to the network, the method being **characterised in that** it comprises the following steps:
- sending (S500) an object request to the server station, the object request including information for identifying an object accessible via the server station;
- receiving (S502) an object response sent by the server station, the object response including information for describing a user interface, the information being associated with programmed functions, the interface allowing a user to use the object;
- starting up (S504, S506) the user interface on the client station;
- executing (S602) at least one function associated with at least one element of the user interface, in response to the activation (S508, S600) of the at least one element by a user;
- sending (S612) a method-execution request to the server station, in response to the execution of at least one programmed function associated with the at least one active element of the user interface, the method-execution request including the information for identifying the object and at least one command which can be understood by the object.

2. Method according to Claim 1, **characterised in that** it further comprises the following steps:
- receiving (S614) a method-execution response sent by the server station in response to the method-execution request, the method-execution response containing data indicative of the result of the execution of the at least one command which can be understood by the object;
- decoding (S620) the data contained in the method-execution response and updating (S622) the user interface, if necessary.

3. Method for executing a function on a data-processing object which can be used, via a server station connected to a communications network, by at least one client station connected to the network, **characterised in that** it comprises the following steps, implemented in the server station:
- receiving an object request originating from a client station, the object request including information for identifying a data-processing object accessible via the server station;
- sending an object response to the client station, the object response including information for describing a user interface, the information being associated with programmed functions, the interface allowing a user to use the object;
- receiving (S700) a method-execution request originating from the client station, the method-execution request including the information for identifying the object and at least one command which can be understood by the object.

4. Method according to Claim 3, **characterised in that** it further comprises the following steps:
- executing (S710-S716) the at least one command, received from the client station, on a data-processing object;
- sending (S726) a method-execution response to the client station, the method-execution response containing data indicative of the result of the execution of the at least one command on the object.

5. Method according to any one of the preceding claims, **characterised in that** the at least one command, which can be understood by the object and which is contained in the method-execution request, consists in the designation of a function of the data-processing object, and in the passing of values given to parameters associated with the designated function.

6. Method according to any one of the preceding claims, **characterised in that** the information for identifying an object comprises an electronic address indicative of the storage location of the object.

7. Method according to Claim 6, **characterised in that** the electronic address indicative of the storage location of the object is a URL-type address.

8. Method according to any one of the preceding claims, **characterised in that** the information for describing a user interface is data expressed in a data-processing communications language of the "markup language" type.

9. Method according to Claim 8, **characterised in that** the communications language is based on the XML language.

10. Method according to any one of the preceding claims, **characterised in that**, in order to be accessible on the network, the data-processing object is associated in the server station with an electronic document (3071) containing the information for describing at least one user interface and the associated programmed functions.

11. Method according to Claim 10, **characterised in that** the electronic document (3071) is a document of the "XML document" type.

12. Method according to Claim 10 or 11, **characterised in that** the electronic address indicative of the storage location of the object is an address of "URL" type associated with the electronic document (3071).

13. Method according to any one of the preceding claims, **characterised in that** the communications network is a network of the Internet type.

14. Method according to any one of the preceding claims, **characterised in that** the client station and the server station communicate by using a communications protocol of the "hypertext transfer protocol" (HTTP) type, and **in that** the messages exchanged between the server station and the client station are HTTP messages.

15. Method according to any one of the preceding claims, **characterised in that** the programmed functions associated with the information for describing a user interface are implemented in the Javascript programming language.

16. Device (400) for remotely using a data-processing object accessible via a server station connected to a communications network, from a client station connected to the network, the device being **characterised in that** it comprises:
- means (406, 402) for sending an object request to the server station, the object request including information for identifying an object accessible via the server station;
- means (402) for receiving an object response sent by the server station, the object response including information for describing a user interface, the information being associated with programmed functions, the interface allowing a user to use the object;
- means (404, 408, 410) for starting up the user interface on the client station;
- means (408, 410) for executing at least one programmed function associated with one element of the user interface, in response to the activation of the element by a user;
- means (402, 404, 406, 410) for sending a method-execution request to the server station, the method-execution request including the information for identifying the object and at least one command which can be understood by the object.

17. Device according to Claim 16, **characterised in that** it further comprises:
- means (402) for receiving a method-execution response sent by the server station in response to the method-execution request, the method-execution response containing data indicative of the result of the execution of the at least one command which can be understood by the object;
- means (404) for decoding the data contained in the method-execution response; and
- means (408, 410) for updating the user interface of the object, if necessary.

18. Device according to Claim 16 or 17, **characterised in that** it includes means suitable for implementing a method for remotely using a data-processing object according to any one of Claims 5 to 15.

19. Device (300) for executing a function on a data-processing object which can be used, via a server station connected to a communications network, by at least one client station connected to the said network, **characterised in that** it comprises:
- means (302) for receiving an object request originating from a client station, the object request including information for identifying a data-processing object accessible via the server station;
- means (302, 304) for sending an object response to the client station, the object response including information for describing a user interface, the information being associated with programmed functions, the interface allowing a user to use the object identified in advance by the identification information;
- means (302) for receiving a method-execution request originating from the client station, the method-execution request including the information for identifying the object and at least one command which can be understood by the object.

20. Device according to Claim 19, **characterised in that** it further comprises:
- means (304, 305) for executing the at least one command, received from the client station, on the data-processing object, and for obtaining a result;
- means (302, 304, 305) for sending a method-execution response to the client station, the method-execution response containing data indicative of the result of the execution of the at least one command on the object.

21. Device according to Claim 19 or 20, **characterised in that** it includes means suitable for implementing a method for executing a function on a data-processing object, according to any one of Claims 5 to 15.

22. Data-processing system including a device for remotely using a data-processing object, according to any one of Claims 16 to 18, and/or a device for executing a function on a data-processing object, according to any one of Claims 19 to 21.

23. Device for browsing on the Internet (Web browser) including a device for remotely using a data-processing object, according to any one of Claims 16 to 18.

24. Client station linked to a communications network, **characterised in that** it includes a device for remotely using a data-processing object, according to any one of Claims 16 to 18.

25. Server station linked to a communications network, **characterised in that** it includes a device for executing a function on a data-processing object, according to any one of Claims 19 to 21.

26. Communications network including at least one client station according to Claim 24, and at least one server station according to Claim 25.
